# EUROPEAN PATENT APPLICATION

(11) **EP 4 571 159 A1**
(43) Date of publication of application: **18.06.2025**
(21) Application number: 23217035.7
(22) Date of filing: 15.12.2023
(51) Int. Cl.: F16K 11/044, F16K 27/02, F16K 31/05

(54) **A VALVE ASSEMBLY WITH A VALVE HOUSING AND AN ACTUATOR HOUSING**

(71) Applicant: Danfoss A/S, 6430 Nordborg (DK)
(72) Inventor: TUPICA, Franci, 6430 Nordborg (DK); CLAUSEN, Anders Østergaard, 6430 Nordborg (DK); THALER, Tilen, 6430 Nordborg (DK)
(74) Representative: Inspicos P/S

(57) **Abstract**

A valve assembly (1) comprising a valve housing (2) and an actuator housing (3) is disclosed. The valve housing (2) accommodates a movable valve element for controlling a fluid flow through the valve (1), and the actuator housing (3) accommodates an actuator being operably connected to the movable valve element so as to cause movement thereof. The actuator housing (3) is mounted on the valve housing (2) via a first interface region (9) formed on the valve housing (2) and a mating second interface region (12) formed on the actuator housing (3). The first interface region (9) comprises at least one first guiding feature (10) adapted to cooperate with at least one mating second guiding feature (13) formed on the second interface region (12), so as to guide movement of the actuator housing (3) relative to the valve housing (2) along a substantially linear first direction during mounting of the actuator housing (3) on the valve housing (2). A method for assembling a valve (1) is further disclosed.

## Description

### FIELD OF THE INVENTION

The present invention relates to a valve assembly comprising a valve housing accommodating a movable valve element and an actuator housing mounted on the valve housing, the actuator housing accommodating an actuator being operably connected to the movable valve element. In the valve assembly according to the invention, the actuator housing can be mounted on and disassembled from the valve housing in an easy and failsafe manner. The invention further relates to a method for assembling such a valve.

### BACKGROUND OF THE INVENTION

Controllable valves normally comprise a movable valve element accommodated in a valve housing in such a manner that movements of valve element control the fluid flow through the valve. For instance, the position of the movable valve element may determine at least one opening degree of the valve. The movements of the valve element, and thereby the fluid flow through the valve, may be controlled by appropriately controlling an actuator being operably connected to the movable valve element.

It may be complicated to mount the actuator housing on the valve housing in a correct manner, and incorrect mounting of the actuator housing may result in incorrect valve settings, e.g. in terms of valve position. Accordingly, it is normally left to specifically trained personnel to assemble and disassemble the valve housing and the actuator housing.

### DESCRIPTION OF THE INVENTION

It is an object of embodiments of the invention to provide a valve assembly comprising a valve housing and an actuator housing, in which the valve housing and the actuator housing can be assembled and disassembled in an easy and failsafe manner, and without requiring specially trained personnel.

It is a further object of embodiments of the invention to provide a method for assembling a valve in an easy and failsafe manner.

According to a first aspect the invention provides a valve assembly comprising a valve housing and an actuator housing, the valve housing accommodating a movable valve element for controlling a fluid flow through the valve, and the actuator housing accommodating an actuator being operably connected to the movable valve element so as to cause movement thereof, the actuator housing being mounted on the valve housing via a first interface region formed on the valve housing and a mating second interface region formed on the actuator housing,
wherein the first interface region comprises at least one first guiding feature adapted to cooperate with at least one mating second guiding feature formed on the second interface region, so as to guide movement of the actuator housing relative to the valve housing along a substantially linear first direction during mounting of the actuator housing on the valve housing.

Thus, the valve assembly according to the first aspect of the invention comprises a valve housing and an actuator housing mounted thereon. The valve housing accommodates a movable valve element, and the actuator housing accommodates an actuator being operably connected to the movable valve element. Thus, when the actuator is appropriately operated, the movable valve element is caused to move, and thereby a fluid flow through the valve is controlled.

The valve housing comprises a first interface region and the actuator housing comprises a second interface region, and the first and second interface regions form the interface between the valve housing and the actuator housing, where the actuator housing is mounted on the valve housing.

The first interface region comprises at least one first guiding feature and the second interface region comprises at least one second guiding feature. The first and second guiding features are mating in the sense that they are configured to be brought into engagement with each other. When the first and second guiding features are in engagement they cooperate in guiding a movement of the actuator housing relative to the valve housing along a substantially linear first direction.

Thus, when the actuator housing is to be mounted on the valve housing, the at least one first guiding feature and the at least one second guiding feature merely need to be moved into mutual engagement with each other, and when the actuator housing is subsequently moved towards the valve housing, the at least one first guiding feature and the at least one second guiding feature cooperate in guiding the movement of the actuator housing in such a manner that it is ensured that the actuator housing follows the substantially linear first direction. Thereby it is ensured that the actuator housing is appropriately and correctly mounted on the valve housing, in a failsafe manner. Furthermore, the guiding features ensure that this can be done without requiring special training, i.e. this can, e.g., be performed by normal maintenance or operating personnel.

The first interface region and the second interface region may further be provided with mating locking features being movable into locking engagement by moving the actuator housing relative to the valve housing along a second direction during mounting of the actuator housing on the valve housing.

According to this embodiment, when the actuator housing has been moved relative to the valve housing along the substantially linear first direction, it is subsequently moved relative to the valve housing along the second direction, the second direction differing from the first direction. Thereby the mating locking features are moved into locking engagement with each other, and the actuator housing is locked to the valve housing.

Moving the actuator housing initially along the substantially linear first direction, and subsequently along the second direction, allows the actuator housing to be mounted on the valve housing via a mechanism which is similar to a bayonet coupling. Bayonet couplings are known to be easy and failsafe to operate.

The locking feature provided in the second interface region may be or form part of the at least one second guiding feature. According to this embodiment, the part of the actuator housing which engages the first guiding feature formed on the interface region of the valve housing is also the feature which is subsequently moved into locking engagement with the locking feature formed on the interface region of the valve housing. This provides a simple construction which is easy to operate.

The locking feature provided in the second interface region may be formed on at least one pliable part of the second interface region. According to this embodiment, when the locking features are moved into contact with each other, the pliable part flexes or deflects, thereby forming the locking engagement between the locking features.

The pliable part may, e.g., be formed by providing recesses on opposing sides of the locking feature, thereby forming a flap with the locking feature formed thereon. The flap may then be able to deflect relative to the rest of the actuator housing, thereby allowing the locking feature on the flap to move past the locking feature formed on the interface region of the valve housing, so as to form the locking engagement.

The locking engagement of the mating locking features may form a snap lock. This could, e.g., be obtained by arranging one or both of the mating locking features on a pliable part, as described above. As an alternative, any other suitable design which allows the locking features to be easily moved into locking engagement, where they are subsequently kept firmly in place relative to each other, could be applied.

By using a snap lock it is efficiently ensured that the valve housing and the actuator housing are in a correct position relative to each other and attached firmly to each other once the mating locking features have been moved into locking engagement. Furthermore, the snap lock will normally generate an audible 'click' when the locking engagement is established, thus allowing an operator to easily ascertain that the locking engagement has been obtained in a correct manner.

The second direction may be a rotation of the actuator housing relative to the valve housing. According to this embodiment, the actuator housing is initially moved substantially linearly onto the valve housing along the first direction. Subsequently the actuator housing is rotated relative to the valve housing along the second direction, so as to move the locking features into locking engagement and firmly attach the actuator housing to the valve housing.

The at least one first guiding feature may comprise a groove and the at least one second guiding feature may comprise a protruding portion. According to this embodiment, a groove is formed in the interface region of the valve housing, and a protruding portion is formed in the interface region of the actuator housing. During mounting of the actuator housing on the valve housing, the protruding portion is received in the groove, and when the actuator housing is subsequently moved relative to the valve housing, the protruding portion moves along the groove, thus guiding the movement of the actuator housing relative to the valve housing. Accordingly, the shape of the groove determines the movement of the actuator housing relative to the valve housing.

As an alternative, the at least one second guiding feature may comprise a groove and the at least one first guiding feature may comprise a protruding portion. This is similar to the situation described above, and the remarks set forth in this regard are therefore equally applicable here. However, in this case the groove is formed in the interface region of the actuator housing and the protruding portion is formed in the interface region of the valve housing, rather than the other way around.

The groove may have a tapered shape. For instance, the groove may be wider in a region where the protruding portion is supposed to enter the groove, and narrower in other parts of the groove. This allows the protruding portion to be easily captured by the groove and inserted into the groove without requiring that the valve housing and the actuator housing are positioned very accurately relative to each other. However, when the protruding portion has been moved to the narrower parts of the groove, it is guided accurately by the groove, thereby causing accurate guiding of the movements of the actuator housing relative to the valve housing.

The valve housing and/or the actuator housing may be formed from a composite material. The composite material could, e.g., be a polymer based material, e.g. polyphenylene sulfide (PPS), polybutylene terephthalate (PBT), glass filled polymer (GF), acrylonitrile butadine styrene (ABS), polycarbonate (PC), or a combination of two of more of these materials. Such composite materials are known to be durable, low cost and lightweight. Accordingly, forming the valve housing and/or the actuator housing from a composite material results in a valve which is durable, low cost and lightweight.

The valve assembly may form a three-way valve comprising a first port, a second port and a third port, where the first port is selectively fluidly connectable to the second port and/or the third port inside the valve housing. Three-way valves may, e.g., be used in heat pumps or other applications where it may be desired to mix fluid flows.

As an alternative, the valve assembly may form a two-way valve comprising only a first port and a second port. In this case the movements of the valve element inside the valve housing controls the fluid flow between the first port and the second port.

The at least one first guiding feature and the at least one second guiding feature may be adapted to be brought into engagement with each other when the actuator housing and the valve housing are arranged in at least two distinct relative positions.

According to this embodiment, the valve housing and the actuator housing may be assembled in at least two distinct ways, or with at least two distinct relative orientations of the valve housing and the actuator housing. For instance, the interface region of the valve housing may be provided with two grooves, e.g. arranged opposite to each other, and a protruding portion formed on the interface region of the actuator housing may be selectively introduced into either of the grooves. Depending on which groove is selected, the actuator housing will be oriented relative to the valve housing in a specific manner. For instance, the two orientations may be rotated approximately 180° relative to each other.

This may be relevant in the case that the actuator housing is not entirely symmetrical. For instance, the actuator housing may be provided with an opening, e.g. for a power supply to the actuator. It may be desirable to be able to appropriately position such an opening, depending on conditions at the site where the valve is to be put into operation. Accordingly, it is an advantage that the mutual positions of the valve housing and the actuator housing can be selected among two or more distinct and discrete positions, while still ensuring that the mounting of the actuator housing on the valve housing is guided in the manner described above.

According to a second aspect the invention provides a method for assembling a valve, the valve comprising a valve housing and an actuator housing, the valve housing accommodating a movable valve element for controlling a fluid flow through the valve, and the actuator housing accommodating an actuator being operably connected to the movable valve element so as to cause movement thereof, the valve housing comprising a first interface region with at least one first guiding feature and the actuator housing comprising a second interface region with at least one second guiding feature, the method comprising the steps of:
- moving the valve housing and the actuator housing towards each other, so as to bring the first interface region and the second interface region into contact with each other,
- moving the at least one first guiding feature into engagement with the at least one second guiding feature, and
- moving the valve housing and the actuator housing relative to each other along a substantially linear first direction, while guiding movement of the actuator housing relative to the valve housing by means of the mating at least one first guiding feature and at least one second guiding feature.

The valve being assembled by means of the method according to the second aspect of the invention may advantageously be formed by a valve assembly according to the first aspect of the invention. The remarks set forth above with reference to the first aspect of the invention are therefore equally applicable here. Thus, the valve being assembled comprises a valve housing and an actuator housing, the valve housing accommodating a movable valve element, and the actuator housing accommodating an actuator being operably connected to the movable valve element, as described above. Furthermore, the valve housing comprises a first interface region with at least one first guiding feature, and the actuator housing comprises a second interface region with at least one second guiding feature.

When performing the method according to the second aspect of the invention, the valve housing and the actuator housing are initially moved towards each other. This is done in such a manner that the first and second interface regions, formed on the valve housing and the actuator housing, respectively, are brought into contact with each other.

Next, the at least one first guiding feature and the at least one second guiding feature are moved into engagement with each other. As described above with reference to the first aspect of the invention, this could, e.g., include introducing one more protruding portions into one or more grooves.

Finally, the valve housing and the actuator housing are moved relative to each other along a substantially linear first direction, e.g. bringing the valve housing and the actuator housing closer to each other. Due to the engagement between the at least one first guiding feature and the at least one second guiding feature, the movement of the actuator housing relative to the valve housing is guided, so as to accurately cause the actuator housing to follow the substantially linear first direction.

Accordingly, the method according to the second aspect of the invention allows the valve housing and the actuator housing to be assembled in an easy and failsafe manner, without requiring special training of the personnel performing the assembly.

The first interface region and the second interface region may further be provided with mating locking features, and the method may further comprise the step of moving the mating locking features into locking engagement by moving the actuator housing relative to the valve housing along a second direction. The second direction may, e.g., be a rotation of the actuator housing relative to the valve housing. This has already been described in detail above with reference to the first aspect of the invention.

### BRIEF DESCRIPTION OF THE DRAWINGS

The invention will now be described in further detail with reference to the accompanying drawings in which
Figs. 1 and 2 illustrate a valve assembly according to an embodiment of the invention,
Figs. 3-5 illustrate a valve housing for the valve assembly of Figs. 1 and 2,
Figs. 6-8 illustrate an actuator housing for the valve assembly of Figs. 1 and 2,
Figs. 9-11 illustrate assembling of a valve in accordance with a method according to an embodiment of the invention, and
Figs. 12-19 illustrate steps of a method for assembling a valve according to an embodiment of the invention.

### DETAILED DESCRIPTION OF THE DRAWINGS

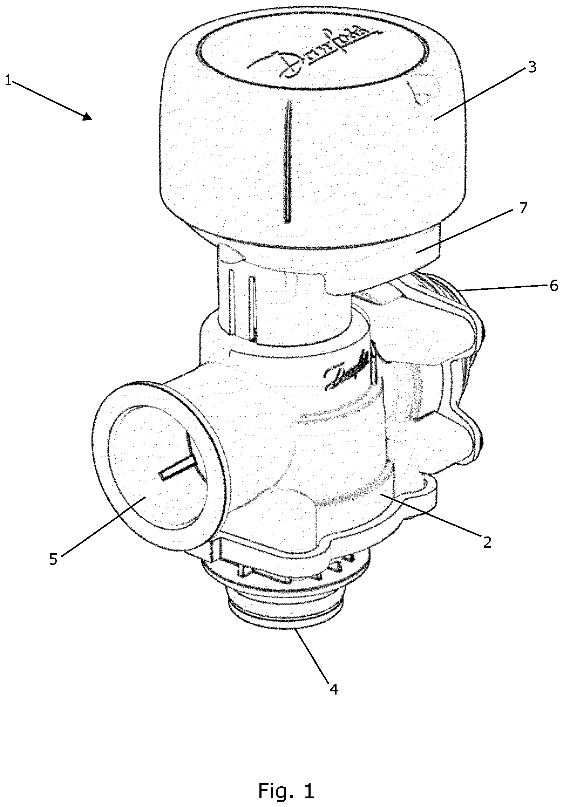

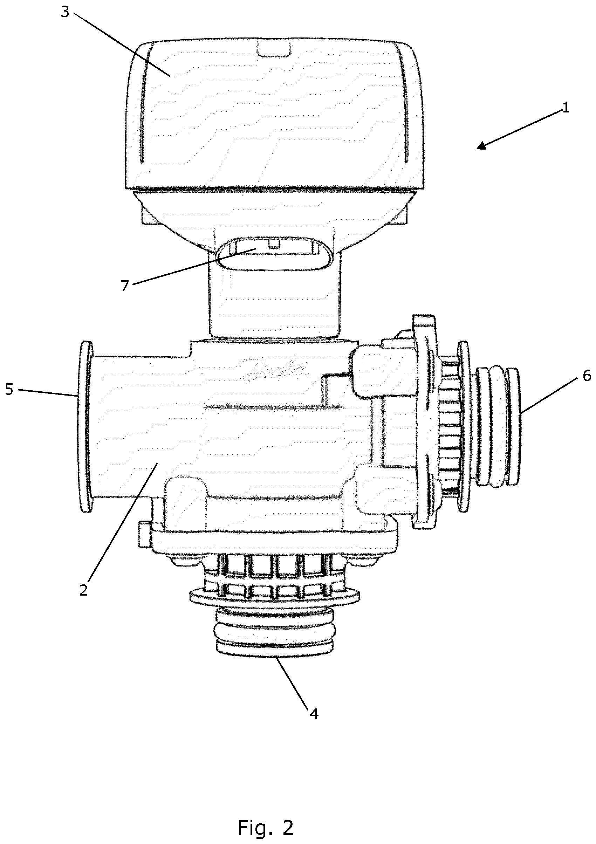

Figs. 1 and 2 illustrate a valve assembly 1 according to an embodiment of the invention. Fig. 1 is a perspective view of the valve assembly 1, and Fig. 2 is a side view of the valve assembly 1.

The valve assembly 1 comprises a valve housing 2 and an actuator housing 3 mounted on the valve housing 2. The valve housing 2 accommodates a movable valve element (not shown) and the actuator housing 3 accommodates an actuator (not shown) being operably connected to the movable valve element. Appropriate operation of the actuator will thus cause movements of the valve element, so as to control a fluid flow through the valve 1.

The valve housing 2 has three ports, in the form of a first port 4, a second port 5 and a third port 6. Fluid connections may be selectively established between the first port 4 and each of the second port 5 and the third port 6. Accordingly, the valve 1 is a three-way valve.

The actuator housing 3 comprises a power connection 7 allowing for power to be supplied to the actuator inside the actuator housing 3, for instance to an electric motor, such as an electric stepper motor, arranged inside the actuator housing 3.

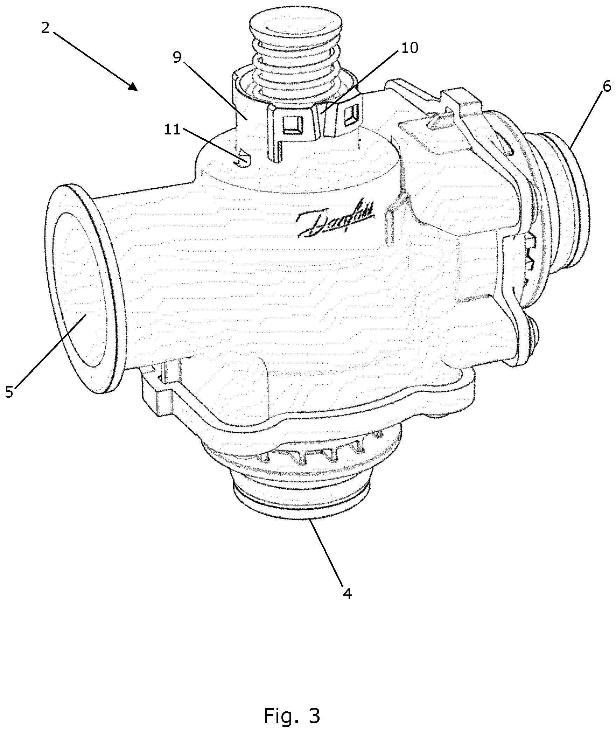

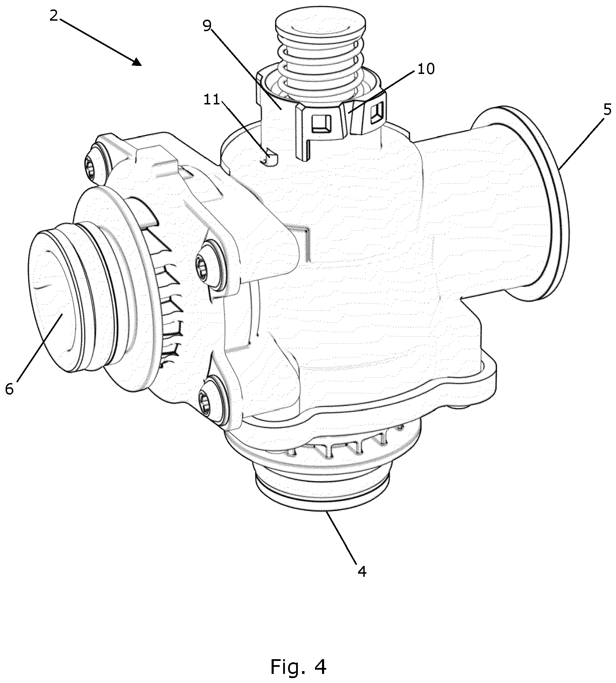

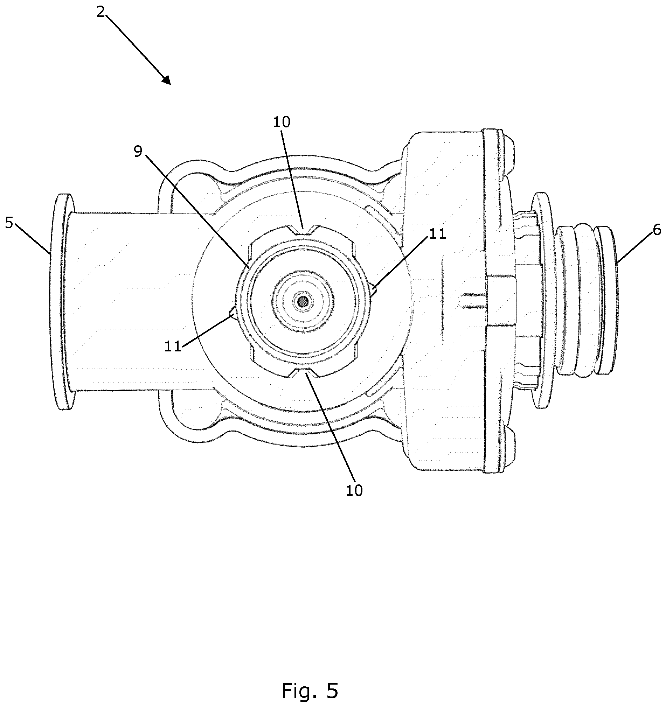

Figs. 3-5 illustrate a valve housing 2 for the valve assembly 1 of Figs. 1 and 2. Figs. 3 and 4 are perspective views of the valve housing 2 from two different angles, and Fig. 5 is a top view of the valve housing 2.

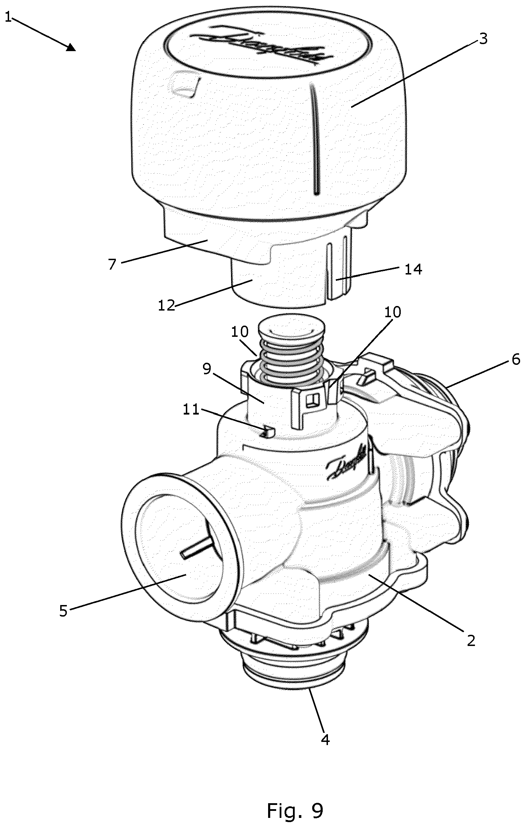

The valve housing 2 comprises a first interface region 9 being provided with two first guiding features 10, in the form of tapered grooves, and two locking features 11, in the form of protruding taps. The first guiding features 10 and the locking features 11 are configured to engage with corresponding features formed on an actuator housing, so as to guide a relative movement between the actuator housing and the valve housing, and so as to lock the actuator housing and the valve housing 2 to each other. This will be described in further detail below with reference to Figs. 9-19.

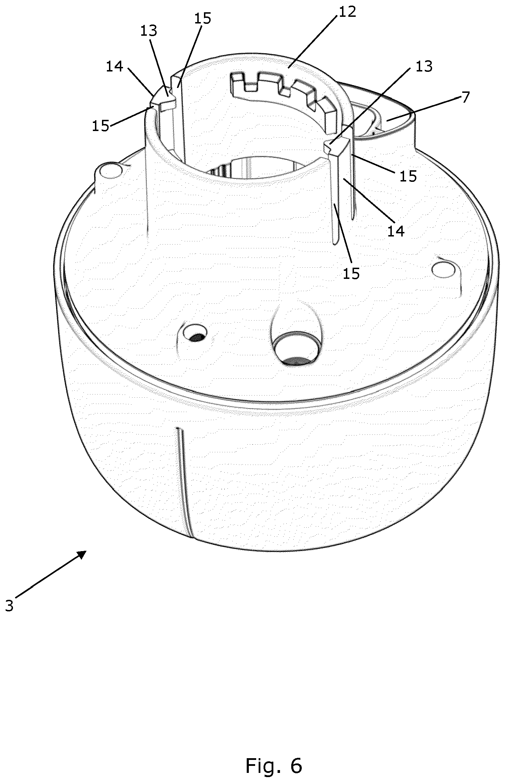

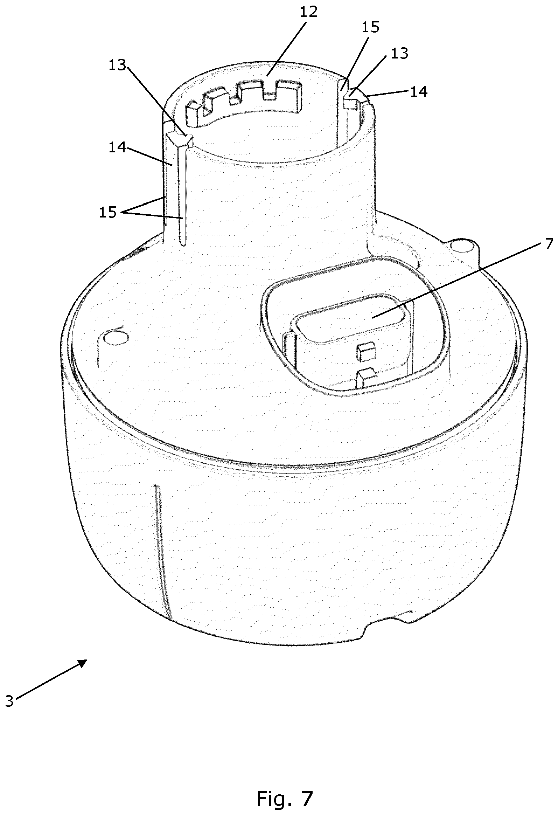

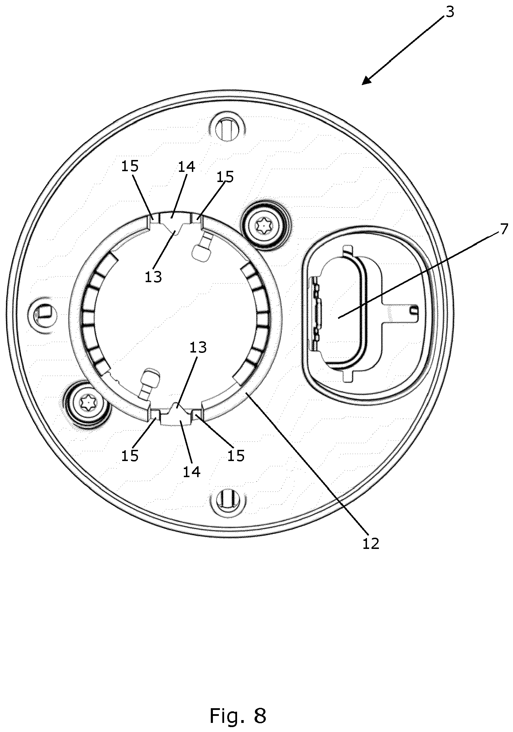

Figs. 6-8 illustrate an actuator housing 3 for the valve assembly 1 of Figs. 1 and 2. Figs. 6 and 7 are perspective views of the actuator housing 3 from two different angles, and Fig. 8 is a view from below of the actuator housing 3.

The actuator housing 3 comprises a second interface region 12 provided with two second guiding features 13, in the form of protruding portions. The second guiding features 13 also function as locking features. This will be described in further detail below with reference to Figs. 9-19.

The second guiding features 13 are each formed on a pliable part 14 of the second interface region 12. Each pliable part 14 is in the form of a deflectable flap formed by providing a recess 15 on either side of the guiding and locking feature 13. Thus, the pliable parts 14 may deflect relative to the rest of the second interface region 12, and thereby the guiding and locking features 13 formed thereon may move, e.g. in order to cause them to pass an obstacle. This will be described in further detail below with reference to Figs. 9-19.

Figs. 9-11 illustrate assembling of a valve 1 in accordance with a method according to an embodiment of the invention. The valve 1 could, e.g., be in the form of the valve assembly 1 illustrated in Figs. 1 and 2 and comprising the valve housing 2 of Figs. 3-5 and the actuator housing 3 of Figs. 6-8. The remarks set forth above with reference to Figs. 1-8 are therefore equally applicable here.

In Fig. 9, the actuator housing 3 is in the process of being moved towards the valve housing 2. More particularly, the second interface region 12 formed on the actuator housing 3 is in the process of being moved towards and into contact with the first interface region 9 formed on the valve housing 2, in such a manner that the second guiding features (not visible) formed on the pliable parts 14 are moved into engagement with the first guiding features 10.

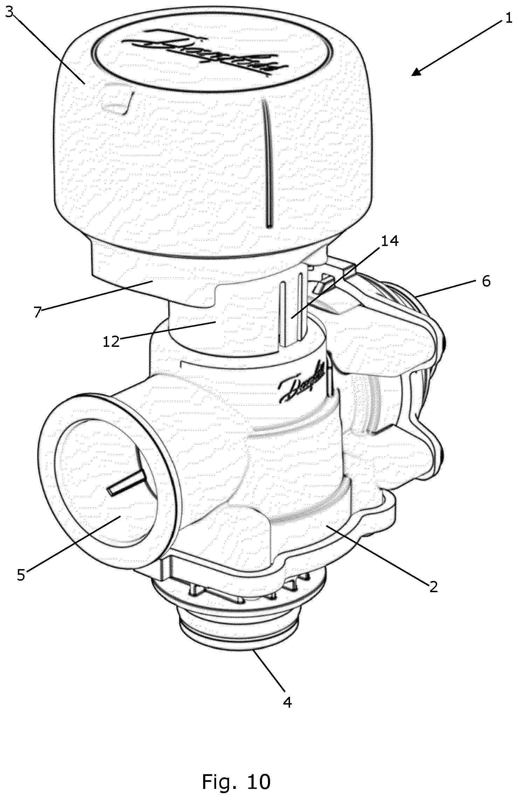

In Fig. 10, the second guiding features (not visible) have been moved into engagement with the first guiding features (not visible), and the movement of the actuator housing 3 relative to the valve housing 2 has been guided by the mating guiding features along a substantially linear first direction defined by the shape of the grooves forming the first guiding features (10 in Fig. 9). Accordingly, the actuator housing 3 is now positioned in abutment with the valve housing 2.

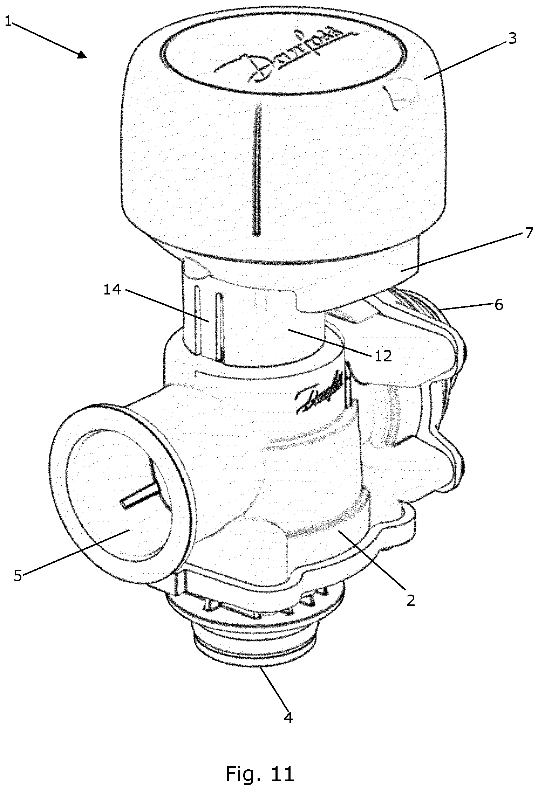

In Fig. 11, the actuator housing 3 has been rotated approximately 90° relative to the valve housing 2. The rotating movement constitutes a movement along a second direction. The rotation of the actuator housing 3 has brought the locking features (not visible) formed on the first interface region (not visible) and the second interface region 12, respectively, into locking engagement. Accordingly, the actuator housing 3 is now firmly and correctly mounted on the valve housing 2.

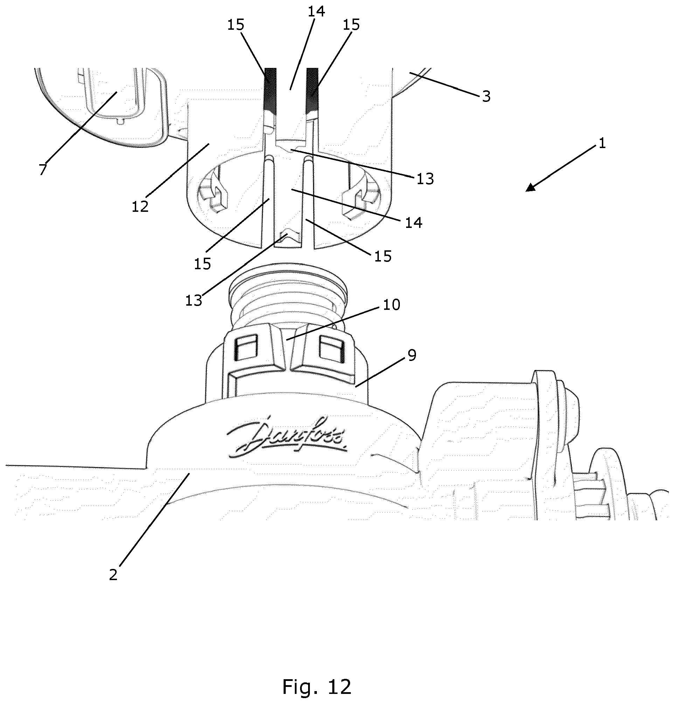

Figs. 12-19 illustrate steps of a method for assembling a valve 1 according to an embodiment of the invention. More particularly, Figs. 12-19 illustrate further details of the method illustrated in Figs. 9-11.

In Fig. 12, the actuator housing 3 is in the process of being moved towards the valve housing 2, similarly to the situation illustrated in Fig. 9. It can be seen that the actuator housing 3 is oriented relative to the valve housing 2 in such a manner that the first guiding features 10 and the second guiding features 13 are arranged adjacent to each other, thereby causing them to engage as the actuator housing 3 is moved further towards the valve housing 2.

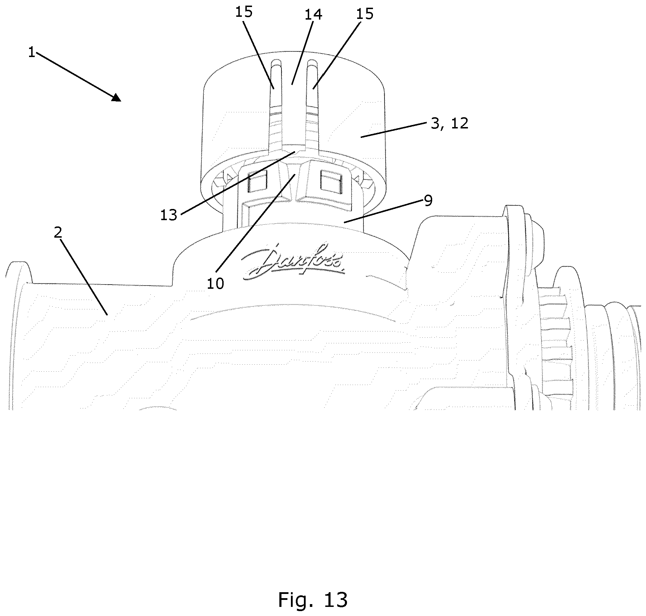

In Fig. 13, the actuator housing 3 has been moved further towards the valve housing 2, and the second guiding features 13 are about to be received in the first guiding features 10. For the sake of clarity, the entire actuator housing 3 is not shown in Figs. 13-19. Instead, only the second interface region 12, being the part of the actuator housing 3 which interacts with the valve housing 2, is shown.

It can be seen in Fig. 13 that the tapered or funnel-like shape of the groove forming one of the first guiding features 10 ensures that the second guiding feature 13 is introduced into and guided by the first guiding feature 10, even if the actuator housing 3 is not positioned very accurately relative to the valve housing 2.

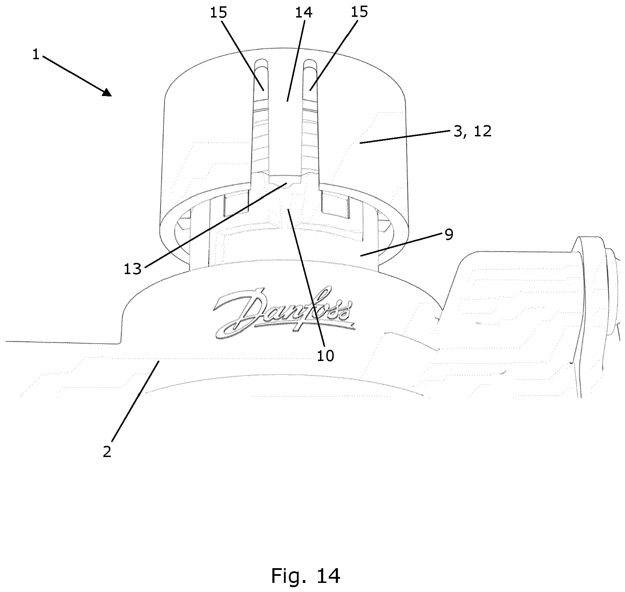

In Fig. 14, the actuator housing 3 has been moved even further towards the valve housing 2, and the second guiding feature 13 has now been introduced into the first guiding feature 10, i.e. the first guiding feature 10 and the second guiding feature 13 have been moved into engagement. Thus, when the movement of the actuator housing 3 towards the valve housing 2 is continued, the engaging guiding features 10, 13 guide this movement, ensuring that the actuator housing 3 is correctly positioned relative to the valve housing 2.

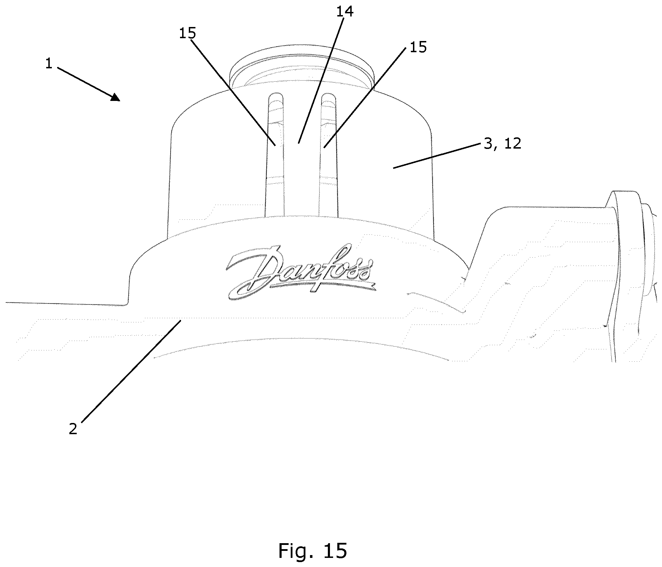

In Fig. 15, the actuator housing 3 has been moved into abutment with the valve housing 2, corresponding to the situation illustrated in Fig. 10.

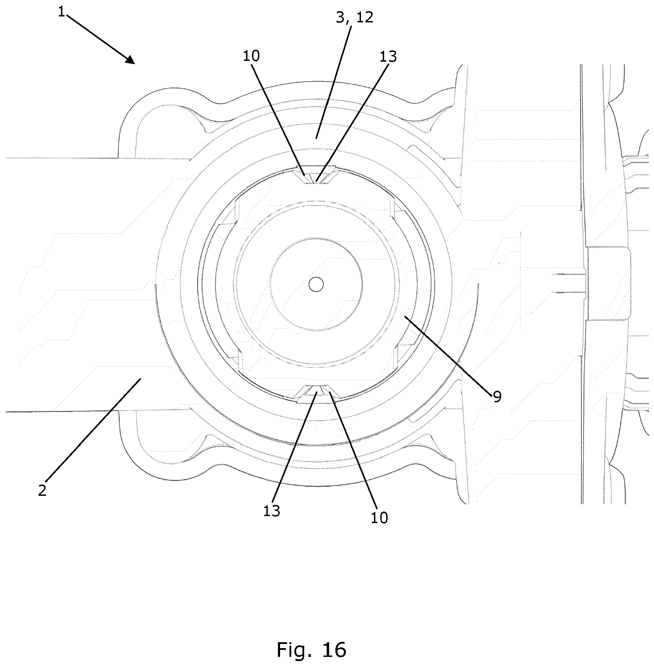

Figs. 16-19 show the valve assembly 1 from above, illustrating details of the first interface region 9 formed on the valve housing 2 and the second interface region 12 formed on the actuator housing 3. In Fig. 16, the first guiding features 10 and the second guiding features 13 are arranged in engagement, and the relative positions of the valve housing 2 and the actuator housing 3 correspond to the situation illustrated in Figs. 10 and 15.

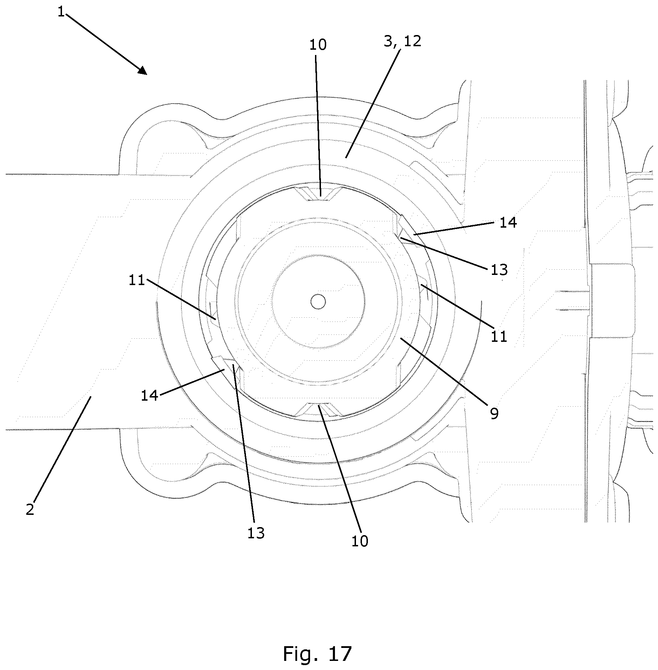

In Fig. 17, the actuator housing 3 is in the process of being rotated relative to the valve housing 2. Thus, the second guiding features 13 have been moved away from the respective first guiding features 10, and towards the locking features 11 formed on the first interface region 9.

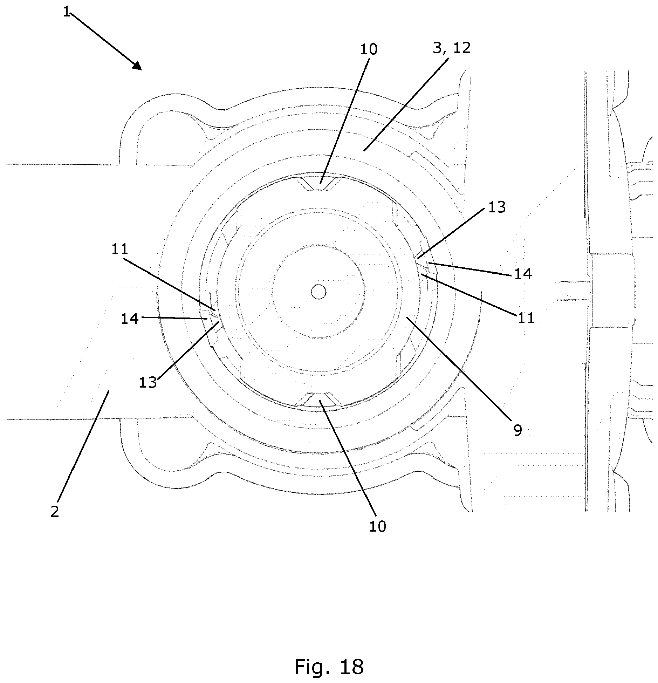

In Fig. 18, the actuator housing 3 has been rotated further relative to the valve housing 2, and the second guiding features 13, which also form locking features formed on the second interface region 12, are now positioned immediately adjacent to the locking features 11 formed on the first interface region 9. Further rotation of the actuator housing 3 relative to the valve housing 2 will cause the locking features 11, 13 in cooperation to temporarily deflect the pliable parts 14 on which locking features 13 are formed, thereby allowing locking features 13 to pass the respective locking features 11 and form locking engagements which firmly lock the actuator housing to the valve housing 2. The passing of the locking features 11, 13 creates an audible 'click' which allows an operator to ensure that the locking engagement has been correctly obtained.

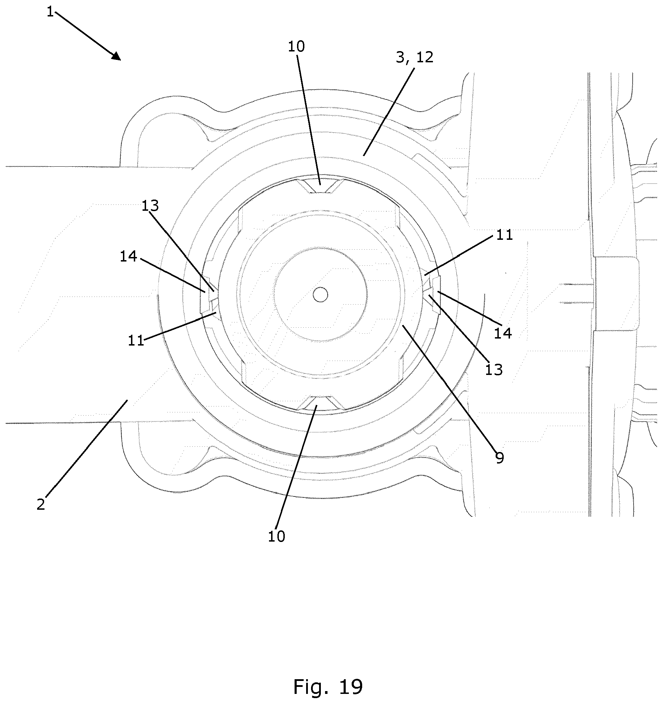

In Fig. 19, locking features 13 have been moved past locking features 11, and the locking engagement has been obtained as described above. The relative position of the valve housing 2 and the actuator housing 3 corresponds to the situation illustrated in Fig. 11.

## Claims

1. A valve assembly (1) comprising a valve housing (2) and an actuator housing (3), the valve housing (2) accommodating a movable valve element for controlling a fluid flow through the valve (1), and the actuator housing (3) accommodating an actuator being operably connected to the movable valve element so as to cause movement thereof, the actuator housing (3) being mounted on the valve housing (2) via a first interface region (9) formed on the valve housing (2) and a mating second interface region (12) formed on the actuator housing (3),
wherein the first interface region (9) comprises at least one first guiding feature (10) adapted to cooperate with at least one mating second guiding feature (13) formed on the second interface region (12), so as to guide movement of the actuator housing (3) relative to the valve housing (2) along a substantially linear first direction during mounting of the actuator housing (3) on the valve housing (2).

2. A valve assembly (1) according to claim 1, wherein the first interface region (9) and the second interface region (12) are further provided with mating locking features (11, 13) being movable into locking engagement by moving the actuator housing (3) relative to the valve housing (2) along a second direction during mounting of the actuator housing (3) on the valve housing (2).

3. A valve assembly (1) according to claim 2, wherein the locking feature (13) provided in the second interface region (12) is or forms part of the at least one second guiding feature (13).

4. A valve assembly (1) according to claim 2 or 3, wherein the locking feature (13) provided in the second interface region (12) is formed on at least one pliable part (14) of the second interface region (12).

5. A valve assembly (1) according to any of claims 2-4, wherein the locking engagement of the mating locking features (11, 13) forms a snap lock.

6. A valve assembly (1) according to any of claims 2-5, wherein the second direction is a rotation of the actuator housing (3) relative to the valve housing (2).

7. A valve assembly (1) according to any of the preceding claims, wherein the at least one first guiding feature (10) comprises a groove and the at least one second guiding feature (13) comprises a protruding portion.

8. A valve assembly (1) according to claim 7, wherein the groove has a tapered shape.

9. A valve assembly (1) according to any of the preceding claims, wherein the valve housing (2) and/or the actuator housing (3) is/are formed from a composite material.

10. A valve assembly (1) according to any of the preceding claims, wherein the valve assembly (1) forms a three-way valve comprising a first port (4), a second port (5) and a third port (6), where the first port (4) is selectively fluidly connectable to the second port (5) and/or the third port (6) inside the valve housing (2).

11. A valve assembly (1) according to any of the preceding claims, wherein the at least one first guiding feature (10) and the at least one second guiding feature (13) are adapted to be brought into engagement with each other when the actuator housing (3) and the valve housing (2) are arranged in at least two distinct relative positions.

12. A method for assembling a valve (1), the valve (1) comprising a valve housing (2) and an actuator housing (3), the valve housing (2) accommodating a movable valve element for controlling a fluid flow through the valve (1), and the actuator housing (3) accommodating an actuator being operably connected to the movable valve element so as to cause movement thereof, the valve housing (2) comprising a first interface region (9) with at least one first guiding feature (10) and the actuator housing (3) comprising a second interface region (12) with at least one second guiding feature (13), the method comprising the steps of:
- moving the valve housing (2) and the actuator housing (3) towards each other, so as to bring the first interface region (9) and the second interface region (12) into contact with each other,
- moving the at least one first guiding feature (10) into engagement with the at least one second guiding feature (13), and
- moving the valve housing (2) and the actuator housing (3) relative to each other along a substantially linear first direction, while guiding movement of the actuator housing (3) relative to the valve housing (2) by means of the mating at least one first guiding feature (10) and at least one second guiding feature (13).

13. A method according to claim 12, wherein the first interface region (9) and the second interface region (12) are further provided with mating locking features (11, 13), and wherein the method further comprises the step of moving the mating locking features (11, 13) into locking engagement by moving the actuator housing (3) relative to the valve housing (2) along a second direction.

14. A method according to claim 13, wherein the second direction is a rotation of the actuator housing (3) relative to the valve housing (2).
